Europäisches Patentamt

European Patent Office

Office européen des brevets

(19)

(11) **EP 0 945 739 A1**

(12)

# DEMANDE DE BREVET EUROPEEN

(43) Date de publication:
**29.09.1999 Bulletin 1999/39**

(51) Int Cl.6: **G01S 13/28**, G01S 7/40,
G01S 7/292

(21) Numéro de dépôt: **99400660.9**

(22) Date de dépôt: **18.03.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **23.03.1998 FR 9803529**

(71) Demandeur: **ALCATEL
75008 Paris (FR)**

(72) Inventeurs:
• **Faure, Alain
31860 Pins Justaret (FR)**
• **Suinot, Noel
31750 Escalquens (FR)**

(74) Mandataire: **Lamoureux, Bernard et al
COMPAGNIE FINANCIERE ALCATEL
Dépt. Propriété industrielle
30, avenue Kléber
75116 Paris (FR)**

(54) **Radar à compression d'impulsion**

(57) L'invention est relative à un procédé de synthèse d'une réplique intervenant dans le filtre de compression d'un radar à compression d'impulsion.

On calcule la réplique (R(f)), 20) à partir du spectre (18) d'une réponse impulsionnelle désirée (RI obj (t), 10).

De préférence la réponse impulsionnelle désirée (RIobj(t)) est obtenue à partir d'une fonction analytique, telle qu'un sinus cardinal (10) ou un sinus cardinal pondéré, et d'un gabarit (12).

Pour le calcul de la réplique (R(f)) il est préférable d'utiliser des signaux d'étalonnage (22, 23, 24) de l'instrument.

L'invention s'applique aussi aux radars à ouverture synthétique.

FIG_1

EP 0 945 739 A1

**Description**

L'invention est relative à un radar à compression d'impulsion.

Dans un radar de ce type, l'onde émise vers la cible est une onde dont la fréquence varie en fonction du temps, par exemple de façon linéaire. Afin de ne pas dégrader, à la réception, le pouvoir séparateur en distance, les ondes sont comprimées dans le temps. Le filtre réalisant cette compression utilise un signal souvent appelé "réplique".

La réplique détermine les performances du radar. Ces dernières sont généralement caractérisées par sa réponse impulsionnelle. La réponse impulsionnelle est la réponse de l'instrument quand le signal est émis vers une cible ponctuelle isolée, sans perturbation. On rappelle ici que la réponse impulsionnelle temporelle RI(t) a pour valeur :

$$RI(t) = s(t)*r(t),$$

s(t) étant le signal émis en fonction du temps, r(t) étant la réplique et le signe * représentant le produit de convolution.

Dans le domaine fréquenciel on obtient donc :

RI(f) = S(f).R(f), où S(f) = F(s(t)) est le spectre du signal émis, et R(f) = F(r(t)) est le spectre de la réplique.

Dans le cas classique du filtrage adapté, qui est le traitement maximisant le rapport signal à bruit, on calcule :

r(t) = s*(t), s*(t) désignant ici le complexe conjugué du signal s(t).

La réponse impulsionnelle se présente, dans ce cas, sous la forme d'un sinus cardinal (sin$t$/$t$) comportant un pic central utile et des lobes secondaires qu'il faut réduire ou éliminer car ils dégradent la qualité des mesures radar étant donné qu'ils peuvent être interprétés comme des fausses cibles et réduisent d'autant l'énergie contenue dans le lobe principal utile.

Le procédé le plus courant pour réduire les lobes secondaires de la réponse impulsionnelle consiste à multiplier la réplique par une fonction de pondération.

Mais la pondération utilisée élargit le lobe principal et abaisse son amplitude maximale. L'élargissement (augmentation de la durée) entraîne une dégradation de la résolution, et la diminution de l'amplitude signifie une dégradation du rapport signal à bruit. Pour obtenir les résultats voulus en résolution et en rapport signal à bruit, on compense cette dégradation par une augmentation de la bande de fréquence émise et de la puissance d'émission. Le radar est ainsi complexe et coûteux. En outre, les lobes lointains, appelés lobes de Fresnel, ne sont pas réduits dans une mesure significative car le niveau de ces lobes est distant de -20 log(BT) + 3dB du maximum du lobe principal, B étant la bande du signal émis et T la durée de l'impulsion émise.

Pour réduire les lobes de Fresnel, on utilise des signaux émis qui s'écartent d'un signal à simple variation linéaire de la fréquence. Ces signaux augmentent les largeurs de bande des signaux émis et reçus, ce qui entraîne également une augmentation de la complexité du radar.

L'invention permet de remédier à ces inconvénients. Elle consiste à synthétiser la réplique à partir de la réponse impulsionnelle désirée.

En d'autres termes, on fixe a priori la réponse impulsionnelle (en temps) que l'on désire obtenir, c'est-à-dire qu'on fixe le niveau d'abaissement des lobes secondaires, le niveau des lobes de Fresnel, et les autres paramètres de la réponse impulsionnelle en fonction des performances désirées. La réplique est obtenue numériquement à partir de la transformée de Fourier de cette réponse impulsionnelle temporelle désirée.

On utilise de préférence un algorithme de transformée de Fourier discrète tel qu'un algorithme de transformée de Fourier rapide (FFT).

La transformée de Fourier de la réponse impulsionnelle désirée fournit un spectre habituellement non borné, c'est-à-dire s'étendant à l'infini. Il est donc, en pratique, nécessaire de sélectionner la bande de fréquences conservée après cette transformation de Fourier. On peut soit se contenter de la bande utile (déterminée par la résolution désirée), soit choisir, en plus, des zones extérieures à la zone utile afin de disposer de davantage de possibilités de former une réponse impulsionnelle répondant à l'objectif. Cette augmentation de bande est par exemple comprise entre 10% et 100%. L'augmentation de la bande doit en effet être limitée car elle augmente la bande de bruit et dégrade en proportion le rapport signal à bruit.

On notera ici que le procédé de synthèse de réplique conforme à l'invention n'est pas limité à une largeur particulière de bande de signal à émettre. Il est compatible avec des signaux émis classiques à variation linéaire de fréquence et avec des signaux à bande plus large correspondant à une loi fréquence/temps non linéaire.

Étant donné que la réplique doit être multipliée par le spectre du signal reçu par le radar et que ce signal est nécessairement affecté par les distorsions - inévitables - introduites par l'instrument, on a constaté que, pour obtenir une réponse impulsionnelle correcte, il était préférable de tenir compte de ces distorsions dans la détermination de la réplique.

C'est pourquoi, dans le mode de réalisation préféré de l'invention, on étalonne l'instrument et on utilise le signal d'étalonnage dans le calcul de la réplique.

A cet effet, on détermine une impulsion temporelle de d'étalonnage puis on en calcule le spectre dont l'inverse est multiplié par la transformée de Fourier (le spectre) de la réponse impulsionnelle désirée.

Cet étalonnage peut être obtenu de manières diverses. Dans un premier exemple, on mesure la distorsion après passage du signal émis dans la chaîne de réception. Ce signal d'étalonnage est ensuite échantillonné et numérisé.

Cette mesure s'effectue de façon périodique, par exemple toutes les minutes, ou à chaque démarrage du radar afin d'ajuster périodiquement la réplique.

Dans un second exemple, qui peut être combiné avec le premier, l'étalonnage est réalisé par estimation, c'est-à-dire par calcul. A cet effet, on combine par calcul les mesures concernant les divers équipements du radar, ou les prédictions de performances afin d'obtenir une estimation du signal tel qu'il devrait être après avoir parcouru tout le radar.

Les performances du radar dépendent également de la précision et de la fréquence du calcul de l'impulsion d'étalonnage dans la mesure où toute dégradation vue par le signal utile, mais non par le signal d'étalonnage, ne pourra pas être injectée dans le calcul de la réplique et donc viendra dégrader la réponse impulsionnelle. Il conviendra donc de choisir le procédé d'étalonnage afin que les distorsions non étalonnées permettent que la réponse impulsionnelle satisfasse aux conditions imposées, c'est-à-dire aux spécifications.

L'invention s'applique non seulement à un radar à compression d'impulsion, mais également à un radar cohérent sur plusieurs impulsions, tel qu'un imageur radar à ouverture synthétique (SAR). Ainsi, dans ce qui précède et dans ce qui suit, l'expression "radar à compression d'impulsion" doit être comprise non seulement pour un radar de ce type, mais aussi pour un radar cohérent pour lequel le signal reçu subirait une variation (linéaire ou non) de fréquence d'impulsion à impulsion, comme c'est le cas avec l'effet Doppler dans le cas du SAR au cours du passage de l'écho transversalement au lobe antenne par suite du déplacement du mobile porteur du radar. Dans ce dernier cas, les distorsions mesurées par l'impulsion d'étalonnage sont les erreurs intervenant lors du temps d'intégration sur plusieurs impulsions.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma, sous forme de blocs, représentant un procédé de synthèse de réplique conforme à l'invention,

les figures 2a à 2c sont des schémas montrant un exemple de détermination d'une impulsion d'étalonnage dans le procédé de la figure 1,

la figure 3 est un schéma, sous forme de blocs, d'un radar conforme à l'invention utilisant la réplique déterminée par le procédé montré sur la figure 1,

la figure 4 est un diagramme d'un gabarit utilisé dans le procédé selon l'invention,

la figure 4a montre un exemple de modulation de signal émis,

la figure 4b est un graphique montrant la réponse impulsionnelle obtenue avec une réplique pondérée classique, et

la figure 4c est un graphique montrant une réponse impulsionnelle obtenue avec une réplique conforme à l'invention.

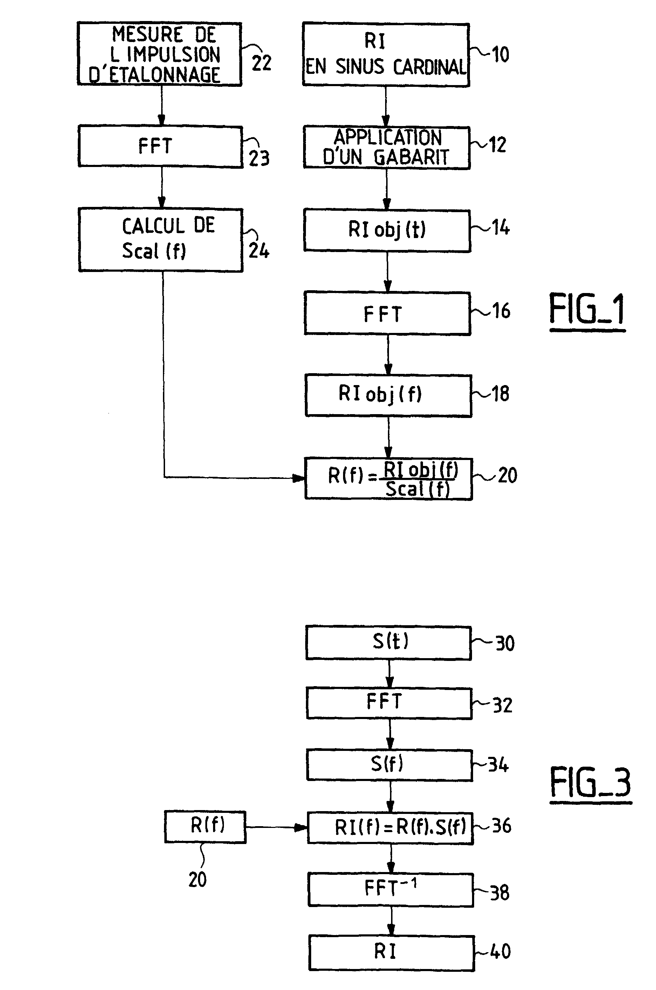

On se réfère tout d'abord à la figure 1. Dans le procédé représenté sur cette figure, on synthétise la réplique fréquencielle R(f) (qui sera utilisée dans le filtre de compression) qui est caractérisée par une fonction complexe de la fréquence f.

A cet effet (bloc 10), on part, par exemple, d'une réponse impulsionnelle classique en sinus cardinal (éventuellement pondéré) qui correspond à un signal d'émission sans distorsions dont la fréquence varie linéairement en fonction du temps, c'est-à-dire à un "chirp" dit idéal. Cette réponse impulsionnelle classique, qui est une fonction du temps, est un signal numérique.

Ensuite (bloc 12), on applique à cette réponse impulsionnelle classique un gabarit qui a pour but de réduire les lobes secondaires et les lobes lointains ainsi que les lobes diffus en fonction de la précision voulue pour le radar.

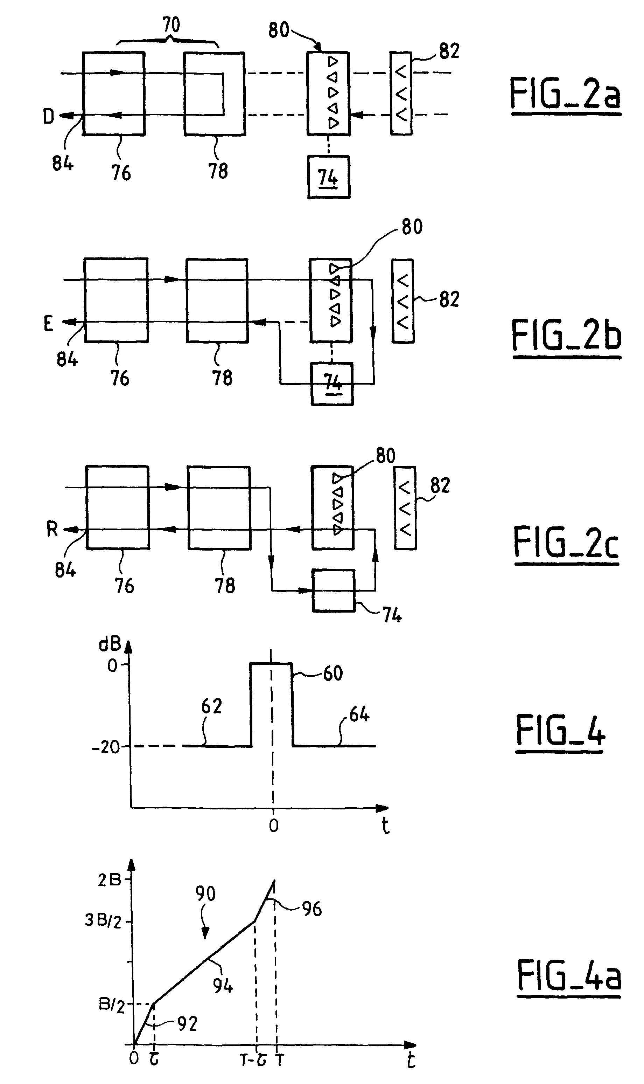

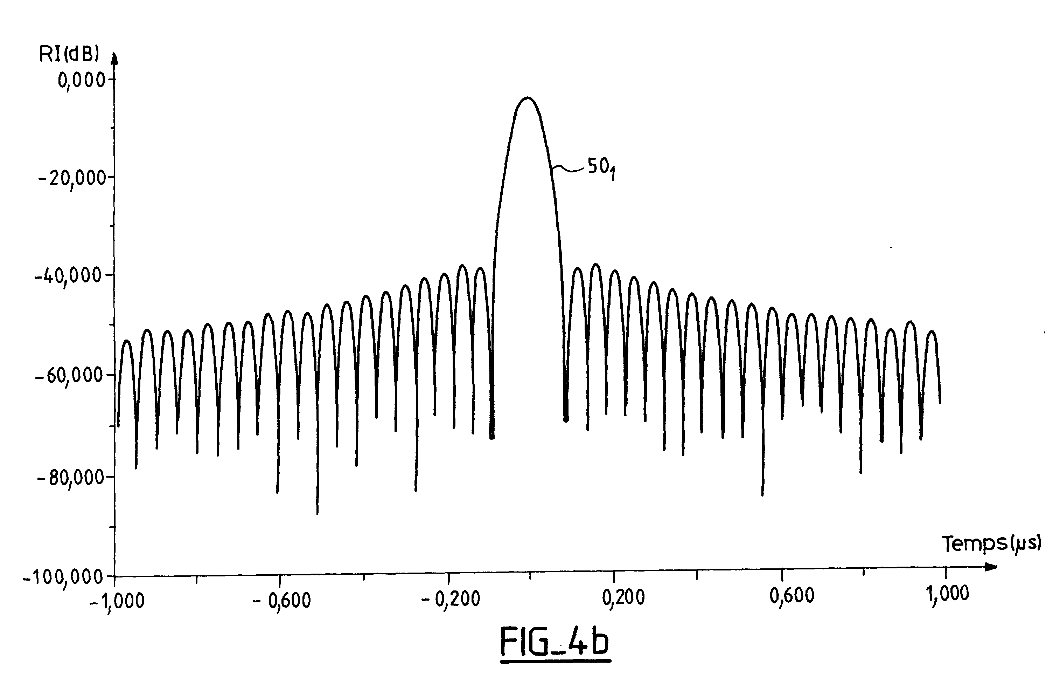

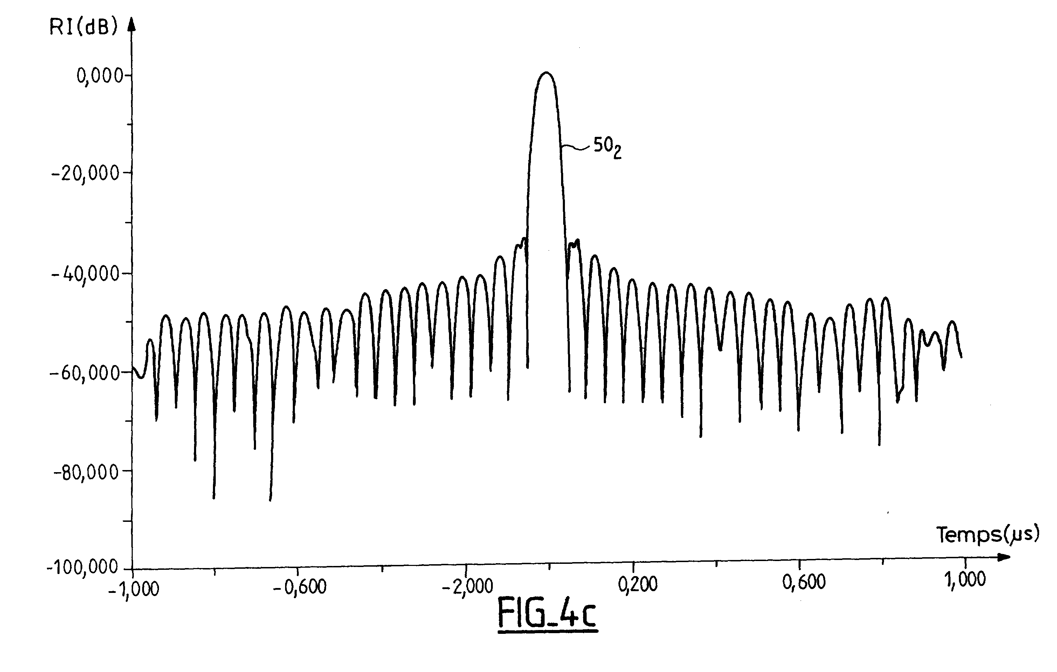

A titre d'illustration, on donne figure 4 un exemple de gabarit montrant l'objectif avec une réponse impulsionnelle dont le lobe principal serait celui de la réponse impulsionnelle (RI) idéale en sinc(t) (sinus cardinal) et les lobes secondaires égaux à ceux du sinc(t) moins 20dB. Ce gabarit se présente ainsi avec une partie centrale rectangulaire 60 et des pieds 62 et 64 à 20dB sous la partie centrale.

On obtient ainsi, après application du gabarit, la réponse impulsionnelle souhaitée $RI_{obj}(t)$ (bloc 14), soit :

$$RI \text{ idéale}(t) \times Gab(t).$$

Étant donné que la réplique est une fonction de la fréquence, on applique donc à la fonction $RI_{obj}(t)$ une transformation de Fourier, comme représentée par le bloc 16. Dans l'exemple on utilise une transformation de Fourier rapide (FFT).

A l'issue de cette transformation de Fourier, la fonction $Rl_{obj}(f)$ (bloc 18), qui est un spectre, est soumise à un calcul (bloc 20) qui consiste en une division par le spectre d'une impulsion d'étalonnage (ou calibration), à savoir $S_{cal}(f)$.

Ce spectre de l'impulsion d'étalonnage, noté $S_{cal}(f)$, est déterminé (bloc 24) par transformée de Fourier (bloc 23) d'une impulsion d'étalonnage mesurée et/ou estimée (bloc 22).

On va maintenant décrire en relation avec les figures 2a à 2c un exemple de mesure de l'impulsion d'étalonnage.

Sur les figures 2a, 2b et 2c on a représenté à chaque fois les parties principales de l'instrument, à savoir un plateau radar 70, un module d'antenne 72 et un réseau 74 de distribution, ou formateur de faisceau, du signal RF.

Le plateau radar 70 comprend un module numérique 76 qui a pour but de générer le signal d'émission et de l'échantillonner à la réception et un module RF 78 qui a pour but d'effectuer le changement de fréquence et l'amplification. Ces deux modules concernent tant l'émission que la réception. A l'émission, le module 76 fournit un signal en fréquence intermédiaire au module 78 et, à la réception, c'est le module 78 qui fournit un signal en fréquence intermédiaire au module 76.

L'antenne active 72 comprend une section 80 de modules actifs d'émission et de réception, et un ensemble d'éléments rayonnants 82. Le module 74 permet de prélever ou d'injecter des signaux RF dans l'antenne au cours de l'étalonnage.

Pour déterminer l'impulsion d'étalonnage dans le cas d'un tel instrument, on procède en trois étapes.

Au cours de la première étape, représentée sur la figure 2a, le signal d'émission du radar traverse uniquement les modules 76 et 78 dans les deux sens. On obtient ainsi en sortie de réception 84 un signal $S_D(f)$ ayant la valeur suivante :

$$S_D(f) = S1(f) \times S2(f).$$

Dans cette formule S1(f) est la contribution à la distorsion imposée par les modules 76 et 78 dans la voie d'émission, et S2(f) est la contribution des modules 76 et 78 dans la voie de réception.

Au cours d'une seconde étape, représentée sur la figure 2b, on étalonne la voie d'émission de l'instrument. A cet effet, le signal émis traverse les modules 76 et 78, ceux des éléments de la section 80 qui sont destinés à l'émission, le réseau 74 et, ensuite, traverse de nouveau les modules 78 et 76.

Dans ce cas, on obtient sur la sortie 84 le signal $S_E(f)$ ayant la valeur suivante :

$$S_E(f) = S1(f) \times S_E ant(f) \times S2(f).$$

Dans cette formule S1(f) et S2(f) ont la même signification que dans le cas de la figure 2a décrite ci-dessus, tandis que $S_E ant(f)$ correspond à la distorsion introduite, à l'émission, par l'antenne 80 et le réseau 74.

Au cours de la troisième étape, représentée sur la figure 2c, le signal d'émission traverse d'abord les modules 76 et 78, ensuite le réseau 74, puis les éléments de la section 82 qui sont dédiés à la réception, et, enfin, les modules 78 et 76 vers la sortie 84.

Dans ce cas on obtient sur cette sortie 84, un signal $S_R(f)$ satisfaisant à la formule suivante :

$$S_R(f) = S1(f) \times S_R ant(f) \times S2(f)$$

Dans cette formule $S_R ant(f)$ correspond à la distorsion introduite, dans ce mode de fonctionnement en réception, par le réseau 74 et par les éléments de la section 80 qui sont affectés à la réception.

L'impulsion d'étalonnage Scal(f) a alors pour valeur :

$$S_{cal}(f) = \frac{S_E(f) \times S_R(f)}{S_D(f)} = S1(f) \times S2(f) \times S_E ant(f) \times S_R ant(f).$$

On voit ainsi que l'impulsion d'étalonnage tient compte des distorsions introduites à l'émission et à la réception par les modules 76 et 78, par le module d'antenne et par le réseau 74.

Cependant, cet étalonnage n'est pas parfait car il ne tient pas compte de toutes les distorsions, en particulier celles qui peuvent être introduites à l'aval des éléments de la section 80. Toutefois, l'expérience montre que ce type d'étalonnage fournit des résultats satisfaisants.

Dans le cas d'un radar pour lequel la compression s'effectue sur des impulsions cohérentes successives (par exemple un radar SAR à ouverture synthétique), l'opération d'étalonnage ou estimation consiste à mesurer la variation, d'impulsion à impulsion, en amplitude et en phase du signal reçu. Cette variation est multipliée par un signal S(t) qui est le signal idéal échantillonné à la fréquence d'impulsion (par exemple un "chirp" de bande égale à la bande Doppler pour un radar SAR). Ensuite la réplique est synthétisée comme décrit en relation avec la figure 1.

La réplique synthétisée R(f) (bloc 20) est utilisée de façon classique pour obtenir la réponse du radar, comme représenté sur la figure 3 :

Le signal utile est tout d'abord numérisé. Ce signal utile numérisé est représenté par la fonction S(t) (bloc 30). Ensuite, on applique au signal S(t), une transformation de Fourier rapide (bloc 32), ce qui fournit le signal à comprimer S(f) qui est un spectre (bloc 34).

Pour comprimer le signal on multiplie S(f) par la réplique synthétisée R(f) (bloc 36) . On obtient ainsi le spectre: RI(f) = R(f)xS(f).

A ce signal comprimé, on applique enfin une fonction de Fourier inverse rapide (bloc 38), ce qui fournit la réponse impulsionnelle, en temps, du radar (bloc 40).

On va maintenant décrire les résultats obtenus avec un radar à compression d'impulsion conforme à l'invention et dont le signal émis correspond à un "Chirp" doublement brisé tel que représenté sur la figure 4a. Ce diagramme de la figure 4a représente la variation en fonction du temps t de la modulation fréquentielle du signal émis sur une bande de fréquence 2B. L'émission est effectuée pendant un temps T.

Le diagramme 90 comporte ainsi : une premier segment 92 entre les temps 0 et $\tau$ ($\tau$ étant petit par rapport à la durée T de l'impulsion émise), un second segment 94 entre les instants $\tau$ et T-$\tau$, de pente inférieure à la pente du segment de droite 92 et enfin un troisième segment 96 entre les instants T-$\tau$ et T qui est un segment de droite de même pente que le premier segment 92.

Sur le diagramme de la figure 4b, on a représenté la réponse impulsionnelle obtenue avec une réplique classique égale au conjugué du signal émis, une calibration parfaite et une pondération de Hamming de coefficient 0,58.

La figure 4c représente la réponse impulsionnelle obtenue avec une réplique synthétisée conformément à l'invention, le gabarit imposé - lors de la synthèse - aux lobes secondaires et aux lobes diffus étant du même ordre de grandeur que la pondération de Hamming de 0,58, comme pour la figure 4b.

Sur les diagrammes des figures 4b et 4c, le temps, en microsecondes, est porté en abscisses, l'origine correspondant au pic du lobe principal $50_1$ ou $50_2$.

Dans le cas de l'invention, le lobe principal $50_2$ (fig. 4c) est plus étroit que le lobe principal $50_1$ (fig. 4b)dans le cas classique. On obtient ainsi un gain en résolution de l'ordre de 35%, le facteur d'élargissement passant de 1,2 à 0,89. On rappelle ici que la résolution est le rapport entre le facteur d'élargissement et la bande B de modulation du signal d'émission (figure 4a).

En outre, avec l'invention, le rapport signal à bruit est amélioré d'environ 1 dB.

Pour des performances identiques de résolution, de bilan de liaison, et de niveaux de lobes secondaires pour une cible ponctuelle, avec l'invention on peut obtenir une diminution de 35% de la bande utile émise, une diminution de 25% de la puissance à émettre ainsi que de la consommation et une amélioration du contraste cible ponctuelle sur cible diffuse, et donc une amélioration de la probabilité de détection.

En effet, le lobe principal étant plus étroit de 35% on obtiendra la résolution souhaitée en utilisant une bande B1 telle que :

$B_1$ = Bclassique x 0,65, puisque la résolution est inversement proportionnelle à la bande émise.

De même, au lieu de tirer avantage de l'amélioration (1dB) du rapport signal à bruit obtenue par la méthode de traitement on peut - pour la même performance en SNR ("signal to noise ratio") entre un radar à traitement classique et un radar utilisant le principe de l'invention - diminuer la puissance moyenne émise (donc consommée) de 25%.

Par ailleurs, le lobe principal n'étant pas atténué, le contraste entre cible ponctuelle (lobe principal) et cible diffuse (plancher de bruit) sera augmenté d'autant, ce qui améliorera les performances de détection.

Le procédé selon l'invention s'applique à tout type de radar à compression d'impulsion ou cohérent et, en particulier, aux radars imageurs, aux radars à pluie, aux altimètres, aux diffusiomètres à vent, etc. On rappelle en effet que les radars imageurs (SAR) sont des radars à compression d'impulsion en distance (le chirp est dans l'impulsion émise) et en azimut, c'est-à-dire le long du vecteur vitesse, dans le temps d'intégration cohérent correspondant à la traversée du diagramme antenne.

Les radars à pluie peuvent utiliser la technique de compression d'impulsion, à condition, toutefois, que la technique retenue garantisse un niveau de lobes secondaires très bas, typiquement -60dB, pour éviter la pollution des échos de pluie par les échos de sol. On utilise alors des modulations d'impulsion du type de celle représentée sur la figure 4a.

Les diffusiomètres à vent sont également des radars à compression sur l'axe distance pour améliorer le bilan de liaison.

De même les altimètres sont des radars à compression sur l'axe distance.

Dans tous ces radars, l'optimisation nécessite un compromis entre les paramètres de la réponse impulsionnelle (résolution, niveau des lobes secondaires), les paramètres radar (bande, durée de l'impulsion, rapport signal à bruit) et les algorithmes de compression.

Le tableau I ci-dessous est un tableau comparatif entre les performances obtenues sur un radar ayant des distorsions de type ondulations dans la bande et conforme à l'invention (réplique synthétisée) et les performances obtenues, d'une part, avec une réplique pondérée mais non calibrée, et, d'autre part, avec une réplique classique calibrée, affectée ici d'une pondération de Hamming de 0,58.

Par rapport aux radars à compression d'impulsions à réplique non étalonnée ou étalonnée, on note une nette augmentation du niveau du pic principal, c'est-à-dire une amélioration du rapport signal à bruit, ainsi qu'une nette amélioration de la résolution et également du paramètre ISLR.

TABLEAU I

| Paramètres RI | Réplique non calibrée | Réplique "classique" calibrée | Réplique synthétisée |
|---|---|---|---|
| Niveau du pic principal | -4,9 dB | -4,7 dB | 0 dB |
| Facteur d'élargissement de la résolution | 1,2 | 1,2 | 0,89 |
| ISLR | 17,2 dB | 19,6 dB | 25,6 dB |
| PSLR | 19,8 dB | 34,3 dB | 34 dB |
| SSLR | 41,6 dB | 43 dB | 44,9 dB |

Dans ce tableau ISLR signifie "Integrated Side Lobe ratio" et, de façon classique, correspond au rapport entre l'énergie contenue dans le lobe central (entre le maximum et -3dB) et l'énergie contenue en dehors de ce lobe central.

PSLR signifie "Peak Side Lobe Ratio" et correspond à la distance, en dB, entre le maximum du lobe principal et le maximum d'un lobe secondaire dans une fenêtre déterminée autour du pic principal.

SSLR signifie "Spurious Side Lobe Ratio" et correspond à la distance, en dB, entre le maximum du lobe principal et le maximum d'un lobe secondaire se trouvant à l'extérieur de la fenêtre précitée.

Dans un second exemple on fait appel à un radar émettant un chirp classique, c'est-à-dire une modulation linéaire de fréquence du signal d'émission avec une bande B = 20Mhz et une durée T de 25μsec, la fréquence d'échan-tillonnage étant de 1,1B après un filtre anti-repliement.

Le tableau II ci-dessous permet d'effectuer une comparaison entre un radar à réponse impulsionnelle obtenue de façon classique et un radar conforme à l'invention avec une réponse impulsionnelle synthétisée.

TABLEAU II

| Paramètres RI | RI "classique" Hamming 0,58/0,65 | RI "synthétisée" + Hamming 0,65 |
|---|---|---|
| Pertes sur le pic principal (liées à la pondération) | 1dB/0,6dB | 0,6dB |
| Facteur d'élargissement de la résolution | 1,2/1,1 | 1,1 |
| PSLR | 34,3dB/26,8dB | 33dB |
| ISLR | 19,7dB/19dB | 19,9dB |
| SSLR | 43,3dB/38dB | 43,6dB |

Dans le cas du radar classique on a considéré deux pondérations de Hamming, l'une de coefficient 0,58 et l'autre de coefficient 0,65. Dans le cas de l'invention, la réponse impulsionnelle est synthétisée à partir d'une réponse impulsionnelle en temps obtenue par la méthode classique avec pondération de Hamming de coefficient 0,65 et un gabarit d'atténuation de 20dB sur les lobes secondaires et une limitation de la bande de la réplique à 1,1 fois la bande B du chirp émis.

Le tableau II montre que la réponse impulsionnelle synthétisée présente des lobes secondaires inférieurs à 33dB, c'est-à-dire sensiblement au même niveau que ceux obtenus avec une pondération classique de Hamming de 0,58. Par ailleurs la perte sur le rapport signal à bruit et la dégradation de la résolution sont pratiquement identiques à celles obtenues avec une méthode classique à coefficient de Hamming de 0,65.

Le tableau II montre clairement que l'invention permet, pour un seul coefficient, de combiner les avantages obtenus avec les pondérations classiques de 0,58 et 0,65 sans en représenter les inconvénients.

**Revendications**

1. Procédé de synthèse d'une réplique intervenant dans le filtre de compression d'un radar à compression d'impulsion, dans lequel on calcule la réplique ($R(f)$) à partir d'une réponse impulsionnelle désirée ($RI$ obj (t), caractérisé en ce que la réponse impulsionnelle désirée ($RI_{obj}(t)$) est obtenue à partir d'une fonction analytique, telle qu'un sinus cardinal ou un sinus cardinal pondéré, et d'un gabarit, en ce que pour le calcul de la réplique ($R(f)$) on utilise des signaux d'étalonnage de l'instrument et en ce que la réplique est définie par la formule suivante :

$$R(f) = RI_{obj}(f)/S_{cal}(f),$$

   formule dans laquelle $RI_{obj}(f)$ est le spectre de la réponse impulsionnelle désirée et $S_{cal}(f)$ est le spectre d'un signal d'étalonnage, notamment une impulsion d'étalonnage.

2. Procédé selon la revendication 2, caractérisé en ce que, dans le spectre de la réponse impulsionnelle désirée, on conserve une bande de fréquences supérieure d'environ 10% à 100% de la bande utile pour obtenir la résolution souhaitée.

3. Procédé selon la revendication 1 ou 2, caractérisé en ce que, pour la synthèse de la réplique, on utilise un signal ou une impulsion d'étalonnage qui est mesuré(e) et/ou estimé(e) et qui représente les distorsions introduites par le radar.

4. Procédé selon la revendication 3, caractérisé en ce que la mesure et/ou l'estimation est effectuée de façon périodique afin d'ajuster périodiquement la réplique.

5. Procédé selon la revendication 3 ou 4, caractérisé en ce que la mesure de l'impulsion d'étalonnage consiste à acquérir un signal ayant traversé les chaînes d'émission et de réception du radar.

6. Procédé selon la revendication 2 caractérisé en ce que le spectre de la réponse impulsionnelle désirée est obtenu à l'aide d'un algorithme de transformation de Fourier discrète de la réponse impulsionnelle désirée temporelle.

7. Application du procédé selon la revendication 1 à un radar cohérent sur un temps d'intégration de plusieurs impulsions.

FIG_1

FIG_3

FIG_2a

FIG_2b

FIG_2c

FIG_4

FIG_4a

FIG_4b

FIG_4c

EP 0 945 739 A1

**Office européen des brevets**

# RAPPORT DE RECHERCHE EUROPEENNE

Numéro de la demande

EP 99 40 0660

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 568 150 A (MARTINEAU MICHEAL J ET AL) 22 octobre 1996<br>* abrégé *<br>* colonne 11, ligne 61 - colonne 12, ligne 46 *<br>* colonne 13, ligne 11 - ligne 14 *<br>--- | 1-7 | G01S13/28<br>G01S7/40<br>G01S7/292 |
| A | SKOLNIK, M I: "Introduction to radar Systems"<br>1981 , MCGRAW-HILL , SINGAPORE XP002085824<br>* page 426, ligne 5 - page 427, ligne 17 *<br>--- | 1 | |
| A | VINCENT N ET AL: "SPACEBORNE RAIN RADAR MISSION AND INSTRUMENT ANALYSIS"<br>IGARSS 1996. INTERNATIONAL GEOSCIENCE AND REMOTE SENSING SYMPOSIUM REMOTE SENSING FOR A SUSTAINABLE FUTURE, LINCOLN, NE, MAY 28 - 31, 1996,<br>vol. 1, 28 mai 1996, pages 279-281, XP000659601<br>STEIN T I (ED )<br>* page 280, ligne 17 - ligne 33 *<br>* figures 1,2 *<br>--- | 1-7 | |
| A | VINCENT N ET AL: "PULSE COMPRESSION WITH -65 DB SIDELOBE LEVEL FOR A SPACEBORNE METEOROLOGICAL RADAR"<br>IGARSS 1996. INTERNATIONAL GEOSCIENCE AND REMOTE SENSING SYMPOSIUM REMOTE SENSING FOR A SUSTAINABLE FUTURE, LINCOLN, NE, MAY 28 - 31, 1996,<br>vol. 1, 28 mai 1996, pages 490-492, XP000659613<br>STEIN T I (ED )<br>* le document en entier *<br>--- | 1-7 | **DOMAINES TECHNIQUES RECHERCHES** (Int.Cl.6)<br><br>G01S |

-/--

Le présent rapport a été établi pour toutes les revendications

| Lieu de la recherche | Date d'achèvement de la recherche | Examinateur |
|---|---|---|
| LA HAYE | 4 mai 1999 | Ó Donnabháin, C |

EP 0 945 739 A1

**Office européen des brevets**

**RAPPORT DE RECHERCHE EUROPEENNE**

Numéro de la demande

EP 99 40 0660

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 291 337 A (NIPPON ELECTRIC CO) 17 novembre 1988 * abrégé * | 7 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 4 mai 1999 | Ó Donnabháin, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 0660

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-1999

| Document brevet cité au rapport de recherche | Date de publication | Membre(s) de la famille de brevet(s) | Date de publication |
|---|---|---|---|
| US 5568150 A | 22-10-1996 | AUCUN | |
| EP 0291337 A | 17-11-1988 | JP 1954054 C | 28-07-1995 |
| | | JP 6072920 B | 14-09-1994 |
| | | JP 63282677 A | 18-11-1988 |
| | | US 5079556 A | 07-01-1992 |

EPO FORM P0460